# EUROPÄISCHE PATENTSCHRIFT

(11) **EP 1 746 045 B1**
(45) Veröffentlichungstag und Bekanntmachung des Hinweises auf die Patenterteilung: **16.09.2009**
(21) Anmeldenummer: 05015995.3
(22) Anmeldetag: 22.07.2005
(51) Int. Cl.: B65D 81/32, B65D 41/48

(54) **Mehrkammerausgabevorrichtung**
Multi-chamber dispensing device
Dispositif distributeur multichambres

(43) Veröffentlichungstag der Anmeldung: 24.01.2007
(73) Patentinhaber: Dentaco Dentalindustrie und -marketing GmbH, 61352 Bad Homburg (DE)
(72) Erfinder: Sògaro, Alberto C., 61476 Kronberg (DE)
(74) Vertreter: advotec.

(56) Entgegenhaltungen:
- US-A- 3 073 472
- US-A- 5 335 827
- US-A- 5 401 169
- US-A- 5 443 183

## Beschreibung

Die Erfindung betrifft eine Mehrkammerausgabevorrichtung zur Ausgabe eines aus mehreren Substanzen bestehenden Gemisches.

Eine derartige Mehrkammerausgabevorrichtung ist aus der EP 1 203 593 A1 bekannt und zum einmaligen Gebrauch als Wegwerfartikel konzipiert.

US 5 401 169 offenbart auch eine Mehrkammerausgabevorrichtung gemäß dem Oberbegriff des Anspruchs 1.

Der Erfindung liegt die Aufgabe zugrunde, eine zum mehrmaligen Gebrauch geeignete Mehrkammerausgabevorrichtung zu schaffen, die einfach handhabbar und kostengünstig herstellbar ist.

Diese Aufgabe ist durch die Mehrkammerausgabevorrichtung mit den Merkmalen des Patentanspruchs 1 gelöst.

Gegenstand der Erfindung ist mithin eine Mehrkammerausgabevorrichtung zur Ausgabe eines aus mehreren Substanzen bestehenden Gemisches, umfassend eine Aufnahmeeinheit mit mehreren Kammern, die parallel zueinander ausgerichtet sind und von denen jede ein offenes erstes Ende zum Einsetzen eines Kolbens und ein mit einer Austrittsöffnung versehenes zweites Ende aufweist, und mit einer Ausgabeeinheit, die einen Ausgabekanal und einen Adapterabschnitt umfasst, der mit der Aufnahmeeinheit fluiddicht verbunden ist und in den insbesondere die Aufnahmeeinheit zum fluiddichten Verbinden der Ausgabeeinheit mit der Aufnahmeeinheit eingreift. Erfindungsgemäß weist der Adapterabschnitt der Ausgabeeinheit mindestens ein lösbares, radial nach innen vorspringendes Trennelement auf, das mit mindestens einem Rastmittel der Aufnahmeeinheit zusammenwirkt. Nach dem Lösen des Trennelementes ist die Ausgabeeinheit gegenüber der Aufnahmeeinheit in axialer Richtung verschiebbar.

Der Kern der Erfindung liegt mithin darin, dass eine Mehrkammerausgabevorrichtung bereitgestellt wird, bei der die Ausgabeeinheit durch das Trennelement an der Aufnahmeeinheit gesichert ist, so dass keine ungewollte Relativbewegung zwischen den beiden Einheiten erfolgen kann. Eine Relativbewegung, beispielsweise zum Lösen der Ausgabeeinheit von der Aufnahmeeinheit, kann vielmehr erst nach Lösen des Trennelements erfolgen.

Die Mehrkammerausgabevorrichtung, die im wesentlichen spritzenartig ausgebildet sein kann, ist insbesondere zum mehrmaligen Gebrauch ausgelegt, wobei für jeden Gebrauch die Ausgabeeinheit gewechselt werden kann. Hierbei wird vor dem Wechseln der Ausgabeeinheit das Trennelement gelöst, so dass die Ausgabeeinheit im Wesentlichen widerstandsfrei ohne Beschädigung der Aufnahmeeinheit von letzterer getrennt werden kann.

Bei Einsatz der Mehrkammerausgabevorrichtung nach der Erfindung können sich die in den einzelnen Kammern enthaltenen Substanzen stromab der Austrittsöffnungen der Kammern und stromauf des Ausgabekanals oder in den Ausgabekanal der Ausgabeeinheit vermengen. Die Kammern der Aufnahmeeinheit können unterschiedliche oder gleiche Volumina aufweisen, so dass durch entsprechende Auslegung der jeweiligen Austrittsöffnungen ein gewünschtes Mischungsverhältnis zwischen den in den Kammern separat vorgehaltenen Substanzen eingestellt werden kann. Die Substanzen werden durch einen Kolbendruck aus den Kammern der Aufnahmeeinheit in die Ausgabeeinheit und deren Ausgabekanal gefördert, über den sie dann in gemischter Form applizierbar sind.

Bei einer bevorzugten Ausführungsform der Mehrkammerausgabevorrichtung nach der Erfindung ist das Trennelement mit einem bandartigen, radial nach innen vorspringenden Trennband versehen, das die Aufnahmeeinheit umschließt und durch Zug zumindest zum Großteil von der Ausgabeeinheit trennbar ist.

Um einem Benutzer der Mehrkammerausgabevorrichtung nach der Erfindung ein bequemes Mittel zum Trennen bzw. Austauschen der Ausgabeeinheit von der Aufnahmeeinheit an die Hand zu geben, weist das Trennelement vorzugsweise mindestens eine Zuglasche auf, die von dem Benutzer leicht greifbar ist.

Das an der Aufnahmeeinheit vorgesehene Rastmittel kann die Ausgabeeinheit entweder in einer Ruhestellung, in der ein Substanzstrom zwischen den Kammern der Aufnahmeeinheit und dem Ausgabekanal der Ausgabeeinheit gesperrt ist, und/oder einer Ausgabestellung sichern, in der bei einem Druck auf die Kolben die in den Kammern enthaltenen Substanzen über die Austrittsöffnungen zu dem Ausgabekanal gefördert werden und über diesen applizierbar sind.

Eine besonders wirksame Sicherung eines Verschiebens der Ausgabeeinheit gegenüber der Aufnahmeeinheit wird gewährleistet, wenn das Rastmittel der Aufnahmeeinheit als Ringbund ausgebildet ist.

Um die Ausgabeeinheit problemlos in Rastposition bringen zu können, ist es vorteilhaft, wenn das Rastmittel mit einer Schräge versehen ist, die an der der Rastposition abgewandten Seite angeordnet ist.

Die Sicherung der Ausgabeeinheit an der Aufnahmeeinheit kann beispielsweise derartig erfolgen, dass durch ein Lösen des Trennelementes die Ausgabeeinheit von der Aufnahmeeinheit trennbar ist.

Alternativ oder auch zusätzlich kann die Sicherung derart erfolgen, dass durch ein Lösen des Trennelementes die Ausgabeeinheit und die Aufnahmeeinheit teleskopierbar, d.h. zusammenfahrbar sind.

Bei einer speziellen Ausführungsform der Mehrkammerausgabevorrichtung nach der Erfindung ist das Rastmittel an einem Halsbereich der Aufnahmeeinheit ausgebildet, der stromab den Austrittsöffnungen der Kammern der Aufnahmeeinheit angeordnet ist. Der Halsbereich dient insbesondere zur Fixierung der Ausgabeeinheit und weist daher vorzugsweise einen Außendurchmesser auf, der im Wesentlichen mit dem Innendurchmesser des Adapterabschnitts der Ausgabeeinheit korrespondiert.

Damit ein in Winkelrichtung positionsgenaues Aufsetzen der Ausgabeeinheit auf die Aufnahmeeinheit gewährleistet ist, weist der Halsbereich eine beispielsweise nutartig oder nasenartig ausgebildete Positionierungseinrichtung auf, die mit einem korrespondierenden nasen- bzw. nutartigen Positionierungsmittel des Adapterabschnitts der Ausgabeeinheit zusammenwirkt.

In der Ausgabeeinheit kann eine als Einsatz der Ausgabeeinheit ausgebildete Anschlusseinheit vorgesehen sein, die den Fluidstrom zwischen den Kammern und dem Ausgabekanal steuert.

Um ein ungewolltes Vermischen der Substanz in den Kammern der Aufnahmeeinheit stromab der Austrittsöffnungen zu verhindern, nimmt die Ausgabeeinheit bei eine speziellen Ausführungsform vorzugsweise eine Schließeinheit für die Austrittsöffnungen der Kammern auf, die von der Anschlusseinheit gebildet ist.

Die Anschlusseinheit kann für jede der Kammern einen der jeweiligen Austrittsöffnung zugeordneten Stopfen umfassen. Bei einer Schließeinheit handelt es sich dann um einen Mehrstopfenverschluss.

Die einzelnen Stopfen können von einem plattenartigen Abschnitt der Anschlusseinheit in Richtung der jeweiligen Kammer der Aufnahmeeinheit vorspringen.

Um die Anschlusseinheit in einfacher Weise zusammen mit der Ausgabeeinheit von der Aufnahmeeinheit trennen und wechseln zu können, ist sie vorzugsweise über den plattenartigen Abschnitt in der Ausgabeeinheit verrastet. Die Verrastung der Anschlusseinheit in der Ausgabeeinheit ist vorzugsweise drehfest ausgebildet, so dass auch die Positionierung der Anschlusseinheit gegenüber der Aufnahmeeinheit durch die winkelmäßige Positionierung der Ausgabeeinheit gegenüber der Aufnahmeeinheit vorgegeben ist.

Die Stopfen können so ausgebildet sein, dass sie jeweils in Öffnungsrichtung, d. h. in Ausgabestellung der Ausgabeeinheit, einen Substanzstrom aus den Kammern der Aufnahmeeinheit zu einer beispielsweise mit einem statischen Mischer versehene Mischkammer freigeben, die in der Ausgabeeinheit angeordnet ist. Die Mischkammer kann von dem Ausgabekanal gebildet oder auch stromauf des Ausgabekanals angeordnet sein.

Die Stopfen können zu diesem Zweck derart ausgebildet sein, dass sie jeweils mit einem Querkanal versehen sind, der mit einem sacklochartigen Axialkanal des jeweiligen Stopfens verbunden ist, der zu der Mischkammer führt.

Ferner kann an dem plattenförmigen Körper der Anschlusseinheit ein in Querrichtung vorspringender Ansatz angeformt sein, der mit einer im Inneren des Halsbereichs ausgebildeten Längsnut so zusammenwirkt, dass die Anschlusseinheit zusammen mit der Ausgabeeinheit nur in einer vorgegebenen Drehwinkelstellung in bzw. auf den Halsbereich ein- bzw. aufgesetzt werden kann, in der die Verschlussstopfen der Anschlusseinheit mit jeweils zugeordneten Austrittsöffnungen der Kammern fluchten.

Weitere Vorteile und vorteilhafte Ausgestaltungen des Gegenstandes nach der Erfindung sind der Beschreibung, der Zeichnung und den Patentansprüchen entnehmbar.

Zwei Ausführungsbeispiele der Mehrkammerausgabevorrichtung nach der Erfindung sind in der Zeichnung schematisch vereinfacht dargestellt und werden in der nachfolgenden Beschreibung näher erläutert. Es zeigt:
- Fig. 1: eine perspektivische Darstellung einer erfindungsgemäß ausgebildeten Mehrkammerausgabevorrichtung;
- Fig. 2: einen Längsschnitt durch eine Aufnahmeeinheit mit aufgesetzter Ausgabeeinheit der Mehrkammerausgabevorrichtung nach Fig. 1;
- Fig. 3: einen um 90° gedrehten Längsschnitt der Baueinheit aus Aufnahmeeinheit und Ausgabeeinheit;
- Fig. 4: eine Seitenansicht einer Kolbeneinheit der Mehrkammerausgabevorrichtung nach Fig. 1;
- Fig. 5: eine um 90° gedrehte Seitenansicht der Kolbeneinheit;
- Fig. 6: eine Draufsicht auf die Mehrkammerausgabevorrichtung nach Fig. 1 in axialer Richtung;
- Fig. 7: eine perspektivische Darstellung einer zweiten Ausführungsform der Mehrkammerausgabevorrichtung nach der Erfindung;
- Fig. 8: einen Längsschnitt durch eine Aufnahmeeinheit mit aufgesetzter Ausgabeeinheit der Mehrkammerausgabevorrichtung nach Fig. 7;
- Fig. 9: einen um 90° gedrehten Längsschnitt der in Fig. 8 dargestellten Baueinheit;
- Fig. 10: eine Seitenansicht einer Kolbeneinheit der Mehrkammerausgabevorrichtung nach Fig. 7;
- Fig. 11: eine um 90° gedrehte Seitenansicht der Kolbeneinheit nach Fig. 10; und
- Fig. 12: eine Draufsicht auf die Mehrkammerausgabevorrichtung nach Fig. 7 in axialer Richtung.

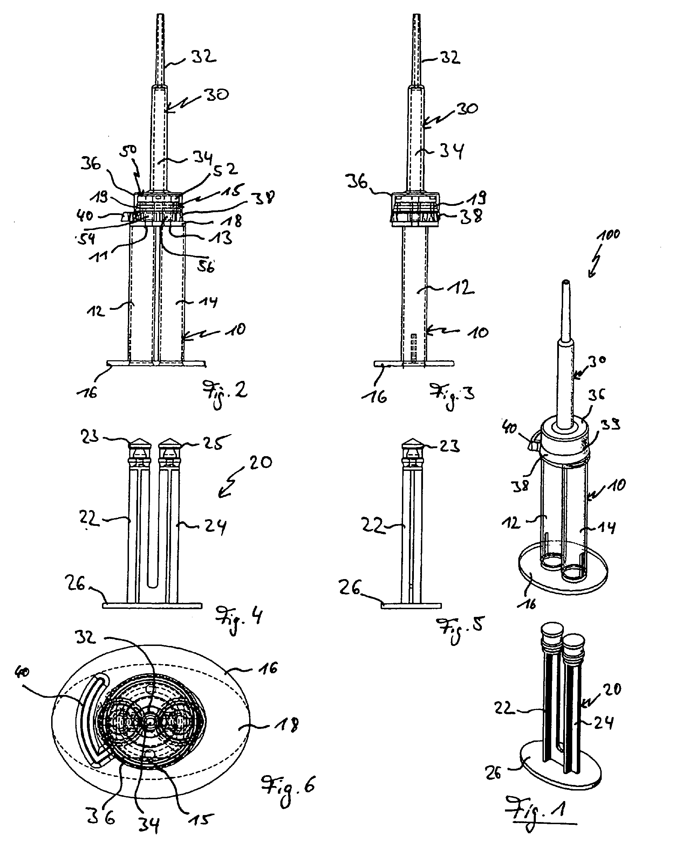

In den Figuren 1 bis 6 ist eine als Zweikammerampulle ausgeführte Mehrkammerausgabevorrichtung 100 dargestellt, die im Wesentlichen aus drei Baueinheiten zusammengesetzt ist. Diese Baueinheiten sind von einer Aufnahmeeinheit 10, einer Kolbeneinheit 20 und einer Ausgabeeinheit 30 gebildet.

Die behälterartig ausgebildete Aufnahmeeinheit 10 umfasst zwei parallel nebeneinander angeordnete, rohrförmige Kammern 12 und 14, die sich in axialer Richtung der Ausgabeeinheit 10 erstrecken. Die Kammern 12 und 14 sind an ihren in der Zeichnung unten dargestellten ersten Enden jeweils über ihren gesamten Querschnitt offen ausgebildet. An die Außenseiten der ersten Enden der Kammern 12 und 14 ist eine sich in Quer- bzw. Radialrichtung erstreckende Rückplatte 16 angeformt. Die den ersten Enden abgewandten zweiten Enden der Kammern 12 und 14 sind über eine angeformte Frontplatte 18 miteinander verbunden. In der Frontplatte 18 sind eine erste Austrittsöffnung 11 für die Kammer 12 und eine zweite Austrittsöffnung 13 für die Kammer 14 ausgebildet.

An der den Kammern 12 und 14 abgewandten Seite ist an der Frontplatte 18 ein Halsbereich 15 angeformt, der die Austrittsöffnungen 11 und 13 umrahmt und im wesentlichen zylindrisch ausgebildet ist. Die Achse des Halsbereichs 15 ist parallel zu den Achsen der Kammern 12 und 14 angeordnet. Bei dem vorliegenden Ausführungsbeispiel haben die Kammern 12 und 14 den gleiche Querschnitt. Dementsprechend haben auch die Austrittsöffnungen 11 und 13 den gleichen Querschnitt. Alternativ könnte auch eine der Kammern mit einem größeren Querschnitt versehen sein, wobei dann die dieser Kammer zugeordnete Austrittsöffnung einen größeren Querschnitt haben sollte als die der anderen Kammer zugeordnete Austrittsöffnung.

Wie insbesondere den Figuren 4 und 5 zu entnehmen ist, umfasst die Kolbeneinheit 20 zwei Kolbenstangen 22 und 24, deren hinteren Enden über eine Drückerplatte 26 miteinander verbunden sind. Am vorderen Ende der Kolbenstange 22 ist ein Kolben 23 für die Kammer 14 ausgebildet. Am vorderen Ende der Kolbenstange 24 ist ein Kolben 25 für die Kammer 14 ausgebildet. Da die Mehrkammerausgabevorrichtung 10 symmetrisch ausgebildet ist, kann die Zuordnung der Kolbenstangen 22 und 24 zu den Kammern 12 und 14 auch in umgekehrter Weise erfolgen. Die Kolben 23 und 25 können in die hinteren offenen Enden der Kammern 12 und 14 eingeführt und in diesen synchron und fluiddicht verschoben werden.

Die Ausgabeeinheit 30 umfasst einen kanülenartig, gestuft ausgebildeten Rohrabschnitt 32, in dem ein an ein in der Zeichnung oben dargestelltes freies Ende führender Ausgabekanal 34 ausgebildet ist, sowie einen Adapterabschnitt 36, der auf den Halsbereich 15 der Aufnahmeeinheit 10 aufgesetzt und ebenfalls im wesentlichen zylindrisch ausgebildet ist.

Zur Fixierung der Ausgabeeinheit 30 an dem Halsbereich 15 der Aufnahmeeinheit 10 weist der Adapterabschnitt 36 an seiner der Aufnahmeeinheit 10 zugewandten Stirnseite ein in Umfangsrichtung verlaufendes Trennband 38 auf, das radial nach innen vorspringt und an einem Ringbund 19 des Halsbereichs 15 der Aufnahmeeinheit 10 verrastet ist. Das Trennband 38 ist entlang einer in Umfangsrichtung verlaufenden Trennnaht 39 von dem übrigen Adapterabschnitt 36 trennbar und weist hierzu eine Zuglasche 40 auf, die von einem Benutzer bequem gegriffen werden kann.

Der ein Rastmittel darstellende Ringbund 19 ist an der den Kammern 12 und 14 abgewandten Seite angeschrägt, so dass die Ausgabeeinheit 30 mit dem Trennband 38 bequem auf den Halsbereich 15 der Aufnahmeeinheit 10 aufgeschoben und dort durch ein Zusammenwirken des radial nach innen vorspringenden Trennbands 38 und des Ringbunds 19 verrastet werden kann.

In dem Adapterabschnitt 36 der Ausgabeeinheit 30 ist des Weiteren eine Anschlusseinheit 50 angeordnet, die blättchenartig ausgebildet ist und einen plattenartigen, sich in radialer Richtung erstreckenden Abschnitt 52 aufweist, über den es in dem Adapterabschnitt 36 verrastet ist und von dem in der dem Ausgabekanal 34 abgewandten Richtung zwei Zapfen bzw. Stopfen 54 und 56 abstehen, die jeweils mit einem Axialkanal versehen sind, der über die Austrittsöffnungen 11 und 13 mit den Kammern 12 und 14 in Verbindung steht. Die beiden Axialkanäle führen von den Austrittsöffnungen 11 und 13 zu der den Kammern 12 und 14 abgewandten Stirnseite der Platte 52, so dass sich die beiden in den Kammern 12 und 14 vorgehaltene Substanzen bei Betätigung der Kolbeneinheit 20 stromab der Platte 52 vermengen können. Zur Unterstützung dieses Prozesses kann in dem Ausgabekanal 34 ein statischer Mischer angeordnet sein. Der statische Mischer ist durch die eingerastete Anschlusseinheit 50 in dem Ausgabekanal 34 gesichert.

Des Weiteren weist der Halsbereich 15 der Aufnahmeeinheit 10 eine hier nicht näher dargestellte Führungsnase auf, die mit einer korrespondierenden Aussparung an der Innenseite des Adapterabschnitts 36 der Ausgabeeinheit 30 zusammenwirkt und die eine Positionierungseinrichtung darstellt, mittels der die Ausgabeeinheit 30 gegenüber der Aufnahmeeinheit 10 winkelmäßig, d.h. in Umfangsrichtung positionsgenau aufsetzbar ist.

Die Anschlusseinheit 50 ist des Weiteren mit einer ebenfalls nicht dargestellten Rastnase versehen, die mit einer korrespondierenden Aussparung an der Innenseite des Adapterabschnitts 36 zusammenwirkt, so dass die Anschlusseinheit 50 drehfest in der Ausgabeeinheit 30 verrastet ist.

Vor Verwendung der Mehrkammerausgabevorrichtung 100 sind zunächst die Austrittsöffnungen 11 und 13 der Kammern 12 und 14 der Aufnahmeeinheit 10 durch ein hier nicht näher dargestelltes Deckelelement verschlossen. Die Kolbeneinheit 20 ist in die Kammern 12 und 14 eingesetzt. Die Kammern 12 und 14 sind jeweils mit einer Komponente eines Zweikomponentensystem, das beispielsweise im Dentalbereich eingesetzt wird, befüllt. Zum Applizieren des Zweikomponentensystems wird nun das Deckelelement von der Aufnahmeeinheit 10 abgenommen und die Ausgabeeinheit 30 auf den Halsbereich 15 aufgesetzt. Hierbei stellt die Anschlusseinheit 50 über ihre Axialkanäle eine Verbindung zwischen dem eine Mischkammer darstellenden Ausgabekanal 34 und den Austrittsöffnungen 11 und 13 der Kammern 12 und 14 her. Das Trennband 56 ist an dem Ringbund 19 des Halsbereichs 15 verrastet. Durch einen Druck auf die Drückerplatte 26 der Kolbeneinheit 20 können nun die einzelnen Komponenten in den Kammern 12 und 14 über die Anschlusseinheit 50 zu dem Ausgabekanal 34 gefördert und über dessen an der der Adaptereinheit 36 abgewandten Stirnseite liegende Öffnung in gemischter Form appliziert werden. Hierbei werden die Kammern 12 und 14 beispielsweise nur teilweise entleert, so dass die Kammern 12 und 14 noch so weit befüllt sind, dass das enthaltene Material für eine weitere Anwendung ausreichend ist. In diesem Fall bewahrt der Benutzer die zusammengesetzte Mehrkammerausgabevorrichtung 100 auf, so dass die stromab des Plättchens 50 vermengten Komponenten aushärten können. Das ausgehärtete Material verschließt die Kammern 12 und 14 bzw. deren Austrittsöffnungen 11 und 13 sicher.

Bei einer erneuten Nutzung der Mehrkammerausgabevorrichtung 100 greift der Benutzer die Zuglasche 40 und trennt das Trennband 38 entlang der Trennnaht 39 von der übrigen Adaptereinheit 36. Dadurch ist die Ausgabeeinheit 30 entsichert. Diese kann nun von dem Halsbereich 15 der Aufnahmeeinheit 10 getrennt werden. Dann wird eine neue Ausgabeeinheit 30 in der oben beschriebenen Art und Weise auf die Aufnahmeeinheit 10 aufgesetzt, so dass die in den Kammern 12 und 14 noch enthaltenen Komponenten des Zweikomponentensystems durch erneutes Applizieren eines Drucks auf die Drückerplatte 26 der Kolbeneinheit 20 über die Ausgabeeinheit 30 ausgetragen werden können.

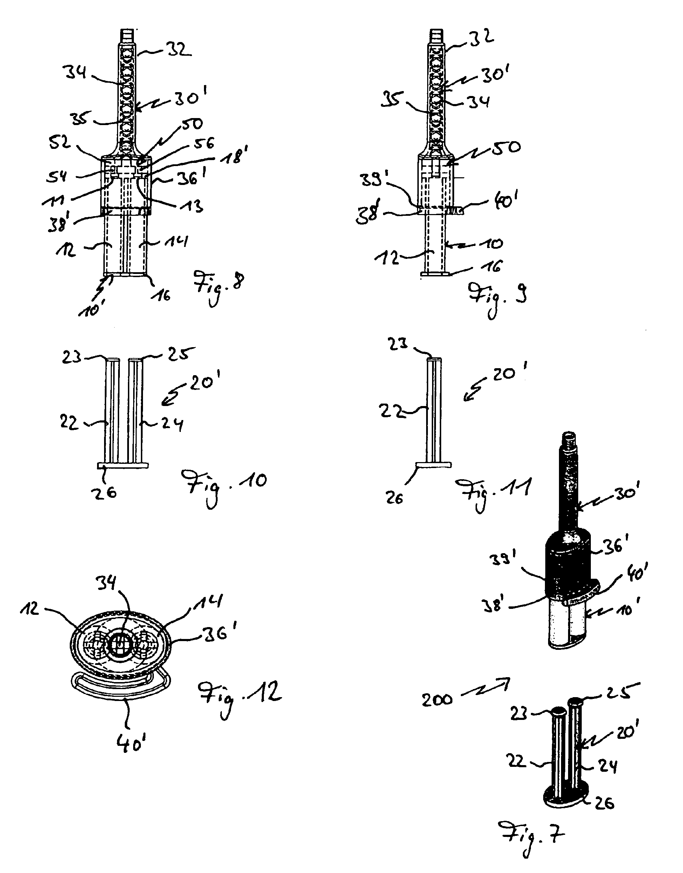

In den Figuren 7 bis 12 ist eine zweite Ausführungsform einer erfindungsgemäß ausgebildeten Mehrkammerausgabevorrichtung dargestellt. Diese Mehrkammerausgabevorrichtung 200 ist entsprechend der in den Figuren 1 bis 6 dargestellten Ausführungsform im wesentlichen aus drei Baueinheiten aufgebaut, die aus einer Aufnahmeeinheit 10', einer Kolbeneinheit 20' und einer Ausgabeeinheit 30' gebildet sind.

Die Mehrkammerausgabevorrichtung 200 unterscheidet sich von derjenigen nach den Figuren 1 bis 6 dadurch, dass die Ausgabeeinheit 30' keinen Halsbereich aufweist, sondern dass vielmehr eine Stirnplatte 18', in der die Austrittsöffnungen 11 und 13 für die Kammern 12 und 14 der Aufnahmeeinheit 10' angeordnet sind, die der Kolbeneinheit 20' abgewandte Begrenzung der Aufnahmeeinheit 10' darstellt.

Des Weiteren weist die Ausgabeeinheit 30' einen Adapterabschnitt 36' auf, der einen im Wesentlichen ovalen Querschnitt hat und die der Kolbeneinheit 20' abgewandten Endbereiche der Aufnahmeeinheit 10' aufnimmt.

Entsprechend der Ausführungsform nach den Figuren 1 bis 6 umfasst die Ausgabeeinheit 30' einen rohrartigen Abschnitt 32, in dem ein Ausgabekanal 34 ausgebildet ist, der einen statischen Mischer 35 aufnimmt.

Der statische Mischer 35 ist in dem Ausgabekanal 34 durch ein eine Schließeinheit darstellendes Anschlusseinheit 50' gesichert, die einen plattenartigen Abschnitt 52 aufweist, über den es in der Ausgabeeinheit 30' gesichert ist. Von dem plattenartigen Abschnitt 52 stehen in Richtung der Kammern 12 und 14 zwei Verschlussstopfen 53 und 54 vor, die in die Austrittsöffnung 11 und 13 der Kammern 12 und 14 eingreifen und jeweils mit einem Axialkanal und einem Querkanal versehen sind. In Schließstellung verschließen die Verschlussstopfen 54 und 56 die Austrittsöffnungen 11 und 13. In Öffnungsstellung, d.h. bei in die Kammern 12 und 14 eintauchenden Verschlussstopfen 54 und 56 sind die Querkanäle der Verschlussstopfen 53 und 54 in der jeweils zugeordneten Kammer 12 bzw. 14 der Aufnahmeeinheit 10' angeordnet, so dass jeweils ein Fluidstrom zwischen der Kammer 12 bzw. 14 und dem Ausgabekanal 34 freigegeben ist und durch einen Druck auf die Drückerplatte 26 der Kolbeneinheit 20' die Komponenten eines Zweikomponentensystems, die in den Kammern 12 und 14 vorgehalten werden, über die Querkanäle und Axialkanäle der Verschlussstopfen 54 und 56 durch die Schließeinheit 52 zu dem einen Mischraum bildenden Ausgabekanal 34 gefördert und über diesen in vermischter Form applizierbar sind.

Der Adapterabschnitt 36' der Ausgabeeinheit 30 weist in seinem dem Rohrabschnitt 30 abgewandten Endbereich ein ein Trennelement darstellendes Trennband 38' auf, das mit einer Zuglasche 40' versehen ist und die beiden Kammern 12 und 14 der Aufnahmeeinheit 10' umschließt. Das Trennband 38' springt radial nach innen vor und wirkt mit einem Rastvorsprung zusammen, der an den Kammern 12 und 14 ausgebildet ist. Beim Lösen des Trennbands 38' von dem übrigen Adapterabschnitt 36' entlang einer Trennnaht 39' kann die Ausgabeeinheit 30' und damit die in dieser verrastete Schließeinheit 50' in Richtung des der Kolbeneinheit 20' zugewandten Endes der Aufnahmeeinheit 10' verschoben werden, so dass eine Aktivierungsstellung vorliegt, in der eine Fluidverbindung zwischen den Kammern 12 und 14 einerseits und dem Ausgabekanal 34 andererseits vorliegt. Das Trennband 38 sichert mithin die Ausgabeeinheit 30 und damit die Schließeinheit 50' in Schließstellung. Nach dem Lösen des Trennbandes 38' sind die Aufnahmeeinheit 10' und die Ausgabeeinheit 30' teleskopierbar.

## Patentansprüche

1. Mehrkammerausgabevorrichtung zur Ausgabe eines aus mehreren Substanzen bestehenden Gemisches, umfassend
- eine Aufnahmeeinheit (10,10') mit mehreren Kammern (12,14), die parallel zueinander ausgerichtet sind und von denen jede ein offenes erstes Ende zum Einsetzen eines Kolbens (23,25) und ein mit einer Austrittsöffnung (11,13) versehenes zweites Ende aufweist, und
- eine Ausgabeeinheit (30,30'), die einen Ausgabekanal (34) und einen Adapterabschnitt (36,36') umfasst, der mit der Aufnahmeeinheit (10,10') fluiddicht verbunden ist; **dadurch gekennzeichnet, dass** der Adapterabschnitt (36,36') mindestens ein lösbares, radial nach innen vorspringendes Trennelement (38,38') aufweist, das mit mindestens einem Rastmittel (19) der Aufnahmeeinheit (10,10') zusammenwirkt, und dass nach dem Lösen des Trennelementes (38,38') die Ausgabeeinheit (30,30') gegenüber der Aufnahmeeinheit (10,10') in axialer Richtung verschiebbar ist.

2. Mehrkammerausgabevorrichtung nach Anspruch 1, **dadurch gekennzeichnet, dass** das Trennelement (38,38') ein radial nach innen vorspringendes Trennband ist, das die Aufnahmeeinheit (10.10') umschließt und durch Zug zumindest großteilig von der Ausgabeeinheit (30,30') trennbar ist.

3. Mehrkammerausgabevorrichtung nach Anspruch 1 oder 2, **dadurch gekennzeichnet, dass** das Trennelement (38,38') eine Zuglasche (40,40') aufweist.

4. Mehrkammerausgabevorrichtung nach einem der Ansprüche 1 bis 3, **dadurch gekennzeichnet, dass** das Rastmittel (19) die Ausgabeeinheit (30,30') in einer Ruhestellung und/oder einer Ausgabestellung sichert.

5. Mehrkammerausgabevorrichtung nach einem der Ansprüche 1 bis 4, **dadurch gekennzeichnet, dass** durch ein Lösen des Trennelementes (38) die Ausgabeeinheit (36) von der Aufnahmeeinheit (10) trennbar ist.

6. Mehrkammerausgabevorrichtung nach einem der Ansprüche 1 bis 5, **dadurch gekennzeichnet, dass** durch ein Lösen des Trennelement (38') die Ausgabeeinheit (30') und die Aufnahmeeinheit (10') teleskopierbar sind.

7. Mehrkammerausgabevorrichtung nach einem der Ansprüche 1 bis 6, **dadurch gekennzeichnet, dass** das Rastmittel (19) mit einer Schräge versehen ist, die an der der Rastposition abgewandten Seite angeordnet ist.

8. Mehrkammerausgabevorrichtung nach einem der Ansprüche 1 bis 7, **dadurch gekennzeichnet, dass** das Rastmittel (19) der Aufnahmeeinheit (10) als Ringbund ausgebildet ist.

9. Mehrkammerausgabevorrichtung nach einem der Ansprüche 1 bis 8, **dadurch gekennzeichnet, dass** das Rastmittel (19) an einem Halsbereich (15) der Aufnahmeeinheit (10) ausgebildet ist, der stromab der Austrittsöffnungen (11,13) der Kammern (12,14) der Aufnahmeeinheit (10) angeordnet ist.

10. Mehrkammerausgabevorrichtung nach einem der Ansprüche 1 bis 9, **gekennzeichnet durch** eine an der Aufnahmeeinheit angeordnete Positionierungseinrichtung, mittels der die Ausgabeeinheit (10) **durch** Zusammenwirken mit einem korrespondierenden Positionierungsmittel an dem Adapterabschnitt (36) der Ausgabeeinheit (30) gegenüber der Aufnahmeeinheit (10) in Umfangsrichtung positionierbar ist.

11. Mehrkammerausgabevorrichtung nach einem der Ansprüche 1 bis 10, **dadurch gekennzeichnet, dass** die Ausgabeeinheit (30) eine Anschlusseinheit (50,50') für die Austrittsöffnungen (11,13) der Kammern (12,14) der Aufnahmeeinheit (10,10') aufnimmt.

12. Mehrkammerausgabevorrichtung nach Anspruch 11, **dadurch gekennzeichnet, dass** die Anschlusseinheit (50,50') einen plattenartigen Abschnitt (52) aufweist, und vorzugsweise für jede Kammer (12,14) der Aufnahmeeinheit (10,10') einem der jeweiligen Austrittsöffnung (11,13) zugeordneten Stopfen (54,56) umfasst.

13. Mehrkammerausgabevorrichtung nach Anspruch 11 oder 12, **dadurch gekennzeichnet, dass** die Anschlusseinheit (50) in der Ausgabeeinheit (30) vorzugsweise drehfest verrastet ist.

14. Mehrkammerausgabevorrichtung nach Anspruch 12, **dadurch gekennzeichnet, dass** die Stopfen (54,56) in Ausgabestellung jeweils einen Substanzstrom zu einer Mischkammer (34) freigeben.

15. Mehrkammerausgabevorrichtung nach einem der Ansprüche 1 bis 14, **dadurch gekennzeichnet, dass** die Anschlusseinheit (50,50') einen statischen Mischer (35) in der Ausgabeeinheit (30,30') sichert.

## Claims

1. Multi-chamber dispensing device for dispensing a mixture containing several substances, said dispensing system comprising
a receiving unit (10, 10') with several chambers (12, 14) which are aligned parallel to each other and each of which is provided with a first (open) end for inserting a plunger (23, 25) as well as a second end encompassing an outlet (11, 13), and
a dispensing unit (30, 30') that is provided with a discharge duct (34) and an adapter section (36, 36') for establishing a fluid-tight connection to the receiving unit (10, 10'); **characterized in that** the adapter section (36, 36') comprises at least one removable separator overhanging to the inside (38, 38') which interacts with at least one arresting means (19) of the receiving unit (10, 10') and that, after removing the separator (38, 38'), the dispensing unit (30, 30') is axially movable towards the receiving unit (10, 10').

2. Multi-chamber dispensing device according to claim 1, **characterized in that** the separator (38, 38') is an separation band protruding radially inwards, which surrounds the receiving unit (10, 10') and can be separated from the dispensing unit (30, 30') by pulling.

3. Multi-chamber dispensing device according to claim 1 or 2, **characterized in that** the separator (38, 38') comprises a draw shackle (40, 40').

4. Multi-chamber dispensing device according to one of the claims 1 to 3, **characterized in that** the arresting means (19) secures the dispensing unit (30, 30') in a rest position and/or a dispensing position.

5. Multi-chamber dispensing device according to one of the claims 1 to 4, **characterized in that** the dispensing unit (36) can be separated from the receiving unit (10) by releasing the separator (38).

6. Multi-chamber dispensing device according to one of the claims 1 to 5, **characterized in that** the dispensing unit (30') and the receiving unit (10') are telescopic with the separator (38') released.

7. Multi-chamber dispensing device according to one of the claims 1 to 6, **characterized in that** the arresting means (19) is raked, whereby the raked area is located at the side which is the far side of the arresting position.

8. Multi-chamber dispensing device according to one of the claims 1 to 7, **characterized in that** the arresting means (19) of the receiving unit (10) is built as coiled bundle.

9. Multi-chamber dispensing device according to one of the claims 1 to 8, **characterized in that** the arresting means (19) is positioned at a neck region (15) of the receiving unit (10), and the neck region is located downstream from the outlets (11, 13) of the chambers of the receiving unit (10).

10. Multi-chamber dispensing device according to one of the claims 1 to 9, **characterized by** a positioning device, which is located at the receiving unit and by means of which the receiving unit (10) can be positioned at the adapter section (36) of the dispensing unit (30) opposite to the receiving unit (10) in circumferential direction due to interacting with a corresponding positioning means.

11. Multi-chamber dispensing device according to one of the claims 1 to 10, **characterized in that** the dispensing unit (30) retains a connection unit (50, 50') for the outlets (11, 13) of the chambers (12, 14) of the receiving unit (10, 10').

12. Multi-chamber dispensing device according to claim 11, **characterized in that** the connection unit (50, 50') is provided with a plate-shaped section (52) and, preferably for each chamber (12, 14) of the receiving unit (10, 10'), comprises a plug (54, 56) which is allocated to the relevant outlet (11, 13).

13. Multi-chamber dispensing device according to claim 11 or 12, **characterized in that** the connection unit (50) is firmly snapped into the dispensing unit (30), preferably torque proof.

14. Multi-chamber dispensing device according to claim 12, **characterized in that**, in dispensing position, each of the plugs (54, 56) release a substance flow to the mixing chamber (34).

15. Multi-chamber dispensing device according to one of the claims 1 to 14, **characterized in that** the connection unit (50, 50') secures a static mixer (35) within the dispensing unit (30, 30').

## Revendications

1. Dispositif distributeur multichambres pour la distribution d'un mélange composé de plusieurs substances, comprenant
- un organe d'entrée (10, 10') avec plusieurs chambres (12, 14), qui sont alignées entre elles parallèlement et à partir desquelles chacune présente une première extrémité ouverte pour l'introduction d'un piston (23, 25) et
- une deuxième extrémité munie d'une ouverture de sortie (11, 13), et un organe de sortie (30, 30'), qui comprend un canal de sortie (34) et un secteur adaptateur (36, 36'), qui est relié à l'organe d'entrée (10, 10') de manière étanche aux fluides; **caractérisé en ce que**, le secteur adaptateur (36, 36') présente au moins un élément de séparation (38, 38') amovible, dépassant radialement vers l'intérieur, qui interfère avec au moins un quadrillage (19) de l'organe d'entrée (10, 10'), et que l'organe de sortie (30, 30') est déplaçable axialement face à l'organe d'entrée (10, 10') après avoir desserré l'élément de séparation (38, 38').

2. Dispositif distributeur multichambres selon revendication 1, **caractérisé en ce que** l'élément de séparation (38, 38') est une bande transporteuse dépassant radialement vers l'intérieur, qui entoure l'organe d'entrée (10, 10') et qui est séparable par traction au moins en grande partie de l'organe de sortie (30, 30').

3. Dispositif distributeur multichambres selon revendication 1 ou 2, **caractérisé en ce que** l'élément de séparation (38, 38') présente une languette (40, 40').

4. Dispositif distributeur multichambres selon l'une des revendications 1 à 3, **caractérisé en ce que** le quadrillage (19) bloque l'organe de sortie (30, 30') dans une position de repos et/ou une position de sortie.

5. Dispositif distributeur multichambres selon une des revendications 1 à 4, **caractérisé en ce que** l'organe de sortie (36) est séparable de l'organe d'entrée (10) par un desserrage de l'élément de séparation (38).

6. Dispositif distributeur multichambres selon une des revendications 1 à 5, **caractérisé en ce que** l'organe de sortie (30') et l'organe d'entrée (10) sont téléscopables par un desserrage de l'élément de séparation (38).

7. Dispositif distributeur multichambres selon une des revendications 1 à 6, **caractérisé en ce que** le quadrillage (19) est muni d'une inclinaison, qui est placée sur le côté opposé à la position de quadrillage.

8. Dispositif distributeur multichambres selon une des revendications 1 à 7, **caractérisé en ce que** le quadrillage (19) de l'organe d'entrée (10) est conçu en tant que collet annulaire.

9. Dispositif distributeur multichambres selon l'une des revendications 1 à 8, **caractérisé en ce que** le quadrillage (19) est conçu en une partie collet de l'organe d'entrée (10), qui est placé en aval des orifices d'écoulement (11, 13) des chambres (12, 14) de l'organe d'entrée (10).

10. Dispositif distributeur multichambres selon l'une des revendications 1 à 9, **caractérisé en ce qu'**un dispositif de positionnement placé à un organe d'entrée, au moyen organe de sortie (10).

11. Dispositif distributeur multichambres selon une des revendications 1 à 10, **caractérisé en ce que** l'organe de sortie (30) recueille une unité de raccordement (50, 50') pour les orifices d'écoulement (11, 13) des chambres (12, 14) de l'organe d'entrée (10, 10').

12. Dispositif distributeur multichambres selon revendication 11, **caractérisé en ce que** l'unité de raccordement (50, 50') présente une section plane (52) et de préférence contient pour chaque chambre (12, 14) de l'organe d'entrée (10, 10').

13. Dispositif distributeur multichambres selon revendication 11 ou 12, **caractérisé en ce que** l'unité de raccordement (50) est de préférence bloquée par enclenchement dans l'organe de sortie (30).

14. Dispositif distributeur multichambres selon revendication 12, **caractérisé en ce que** les bouchons (54, 56) libèrent chacun en position de sortie un flux de substance vers une chambre de mélange (34).

15. Dispositif distributeur multichambres selon une des revendications 1 à 14, **caractérisé en ce que** l'unité de raccordement (50, 50') bloque un mélangeur statique (35) dans l'organe de sortie (30, 30').
